# EUROPEAN PATENT SPECIFICATION

(11) **EP 1 767 442 B1**
(45) Date of publication and mention of the grant of the patent: **06.01.2010**
(21) Application number: 06120825.2
(22) Date of filing: 18.09.2006
(51) Int. Cl.: B62D 35/00, F16B 5/02

(54) **Standard modular bracket for mounting aerodynamic appendices on a vehicle cab, especially of an industrial vehicle**
Modulartiger Aufbau einer Standardkonsole für aerodynamische Vorrichtungen an Fahrzeugkabinen, insbesondere an industriellen Fahrzeugen
Console modulaire standardisée d'appendages aérodynamiques de cabine de camions, notamment d'un véhicule industriel

(30) Priority: 22.09.2005 IT MI20051767
(43) Date of publication of application: 28.03.2007
(73) Proprietor: IVECO S.p.A., 10156 Torino (IT)
(72) Inventor: Rolfo, Gian Piero, 10095 Grugliasco (IT)
(74) Representative: Borsano, Corrado

(56) References cited:
- US-A- 4 904 015
- US-A- 5 382 070
- US-A1- 2004 075 298
- US-B1- 6 196 620
- US-B1- 6 338 524

## Description

The present invention relates to a standard modular bracket for mounting aerodynamic appendices to a vehicle cab, especially of an industrial vehicle.

In some types of industrial vehicles, especially those equipped with semi-trailers, there is a gap between the cab and the part behind it, which generally consists of the semi-trailer, so the problem arises of guaranteeing adequate aerodynamic characteristics of the vehicle when it is running, to reduce to a minimum the amount of air flowing between the two parts, which would slow the vehicle down, reducing the air penetration coefficient and ultimately increasing fuel consumption. This problem is usually solved by mounting aerodynamic appendices on the rear lateral edges of the cab, cantilevered towards the semi-trailer, so as to reduce the gap between the two parts. Said appendices are fixed to the edges of the rear wall of the cab by means of appropriately shaped brackets. The conformation of the brackets varies according to the point in which they are applied, in that the shape and the angle of the appendices in relation to the cab both vary. This means that a certain number of differently shaped brackets must be available for each vehicle, creating problems in terms of increased production costs and the need for warehousing and stocks.

A not very efficient solution is disclosed in US6338524 in which an automotive aerodynamic component and object carrier fixture is installed on the top of an automobile with an inclination adjustable according to the handling style of the driver.

Therefore the purpose of this invention is to solve the problems described above with a standard modular bracket for mounting aerodynamic appendices on a vehicle cab, especially of an industrial vehicle.

According to the invention a single type of bracket is used. Said bracket comprises two parts that are fixed respectively to the cab and to the appendices. The two parts are joined together at a variable angle, so as to follow the variations in the shape and in the angle of the aerodynamic appendices.

The bracket is also a symmetrically specular structure, so that it can be used on either side of the cab.

The present invention relates to a bracket for mounting one or more aerodynamic appendices on a vehicle cab, especially of an industrial vehicle, having the features of claim 1.

In particular the present invention relates to a standard modular bracket for mounting aerodynamic appendices on a vehicle cab, especially of an industrial vehicle, and a method for mounting one or more of said brackets, as described more fully in the claims, which are an integral part of this description.

The purposes and advantages of this invention will become clear from the following detailed description of a preferred embodiment (and the relative alternative embodiments), and the drawings that are attached hereto, which are merely illustrative and not limitative, in which:

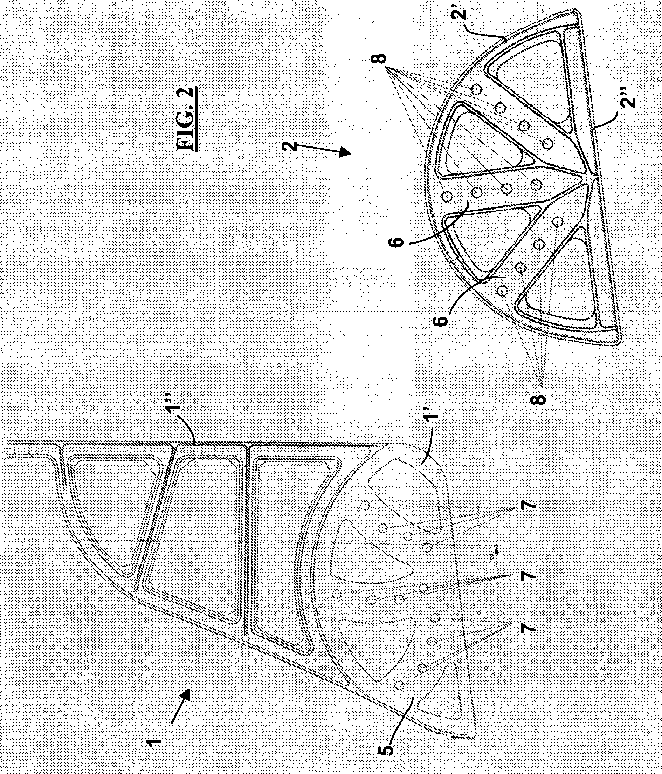

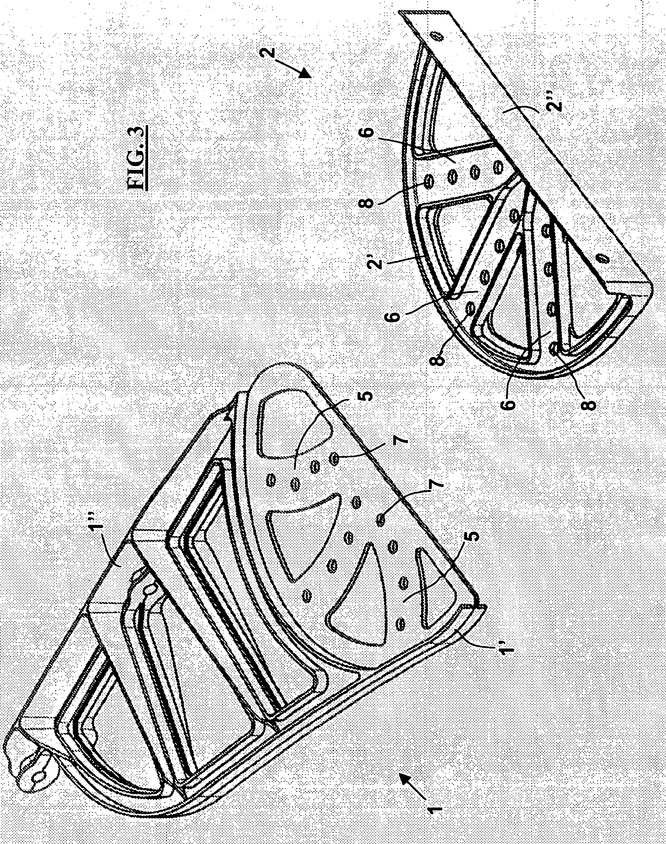

figures 1, 2 and 3 illustrate a preferred embodiment of the bracket according to the present invention;
figure 4 illustrates an alternative embodiment of the part of the bracket that is fixed to the aerodynamic appendix;
figures 5, 6, 7 and 8 illustrate examples of application of the bracket according to the invention to the cab of an industrial vehicle, for mounting aerodynamic appendices.

In the drawings the same numbers refer to the same components.

The bracket according to the invention comprises two parts: a first part 1 that is fixed to the cab , and a second part 2 that is fixed to the appendix.

The first part 1 is fixed to the rear wall 3 of the vehicle cab, preferably perpendicularly thereto, while the second part 2 is fixed to the inner side of the appendix 4, preferably perpendicularly thereto.

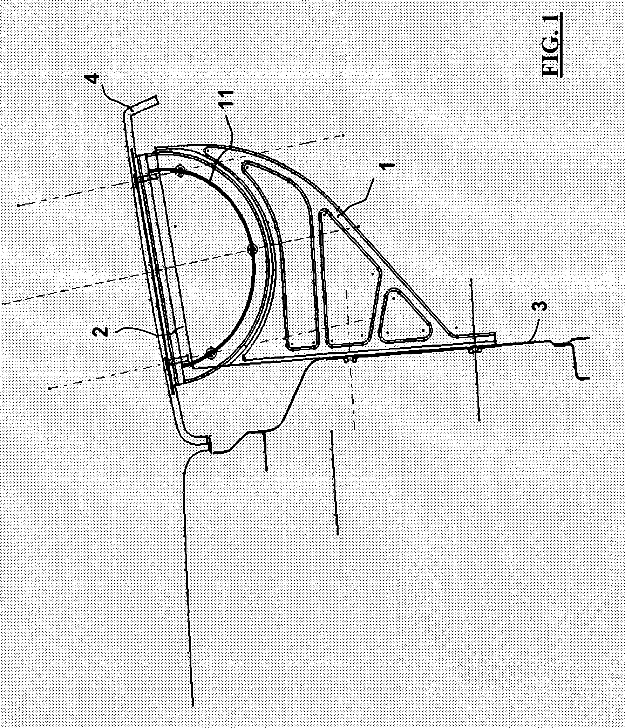

The conformation of the two parts is such that they can at least partially overlap, so that they can be joined together (fig. 1).

The overlapping parts are preferably provided with corresponding semicircular areas delimited by edges that can be at least partially overlapped.

More in detail, the first part 1 is provided with a first semicircular area 1' arranged towards the inside thereof, while the second part 2 is provided with a second semicircular area 2' arranged towards the outside thereof.

Furthermore the first part 1 is provided with a bonding area 1" suitable for being fixed to the rear wall 3 of the vehicle cab, for example using screws or similar devices, while the second part 2 is provided with a bonding area 2" suitable for being fixed to the inner side of the appendix 4.

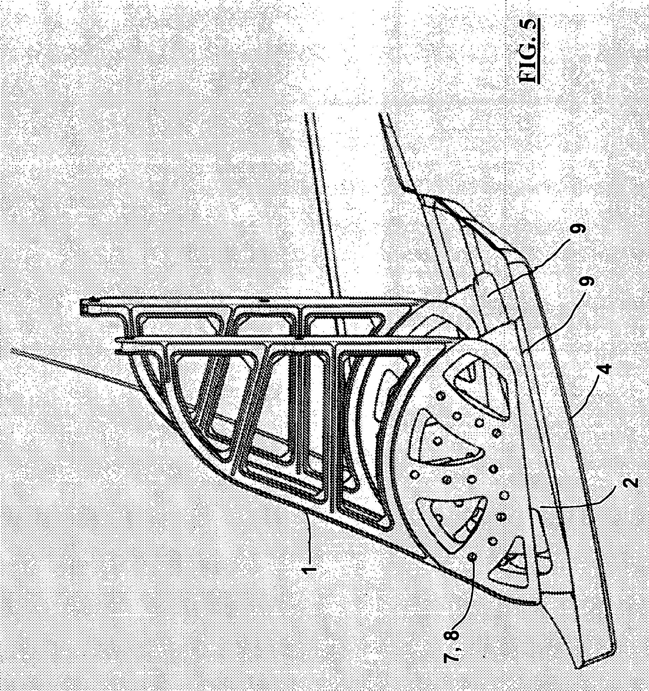

The aerodynamic appendices are preferably provided with bosses 9 (fig. 5) with embedded or molded metal inserts, or plates with studs to enable the bonding areas 2" of the brackets to be secured more firmly, for example by means of screws or similar devices.

The first and second semicircular areas 1' and 2' are provided with spokes, respectively 5 and 6, with relative series of holes 7 and 8 along the length thereof, arranged in appropriate positions that can be defined according to the specific use. The spokes 5 and 6 may extend in a straight or curved line, so that at least a portion of the holes 7 and 8 match up in each position in which the two parts can be joined together, and to enable the insertion of fastening elements such as screws or similar devices (fig. 5).

The bracket may be made of plastic material, for example PA6, possibly reinforced with glass fiber, or aluminium alloy.

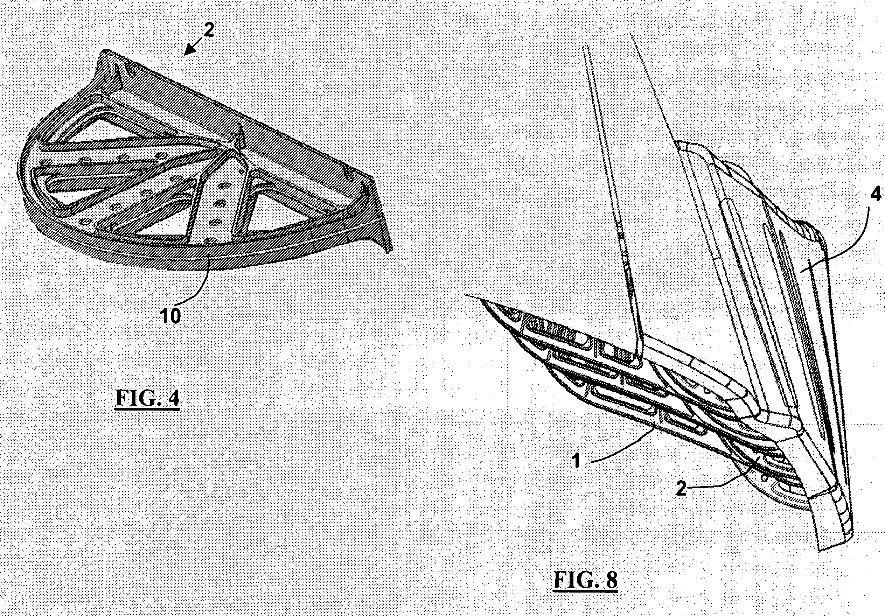

Mounting the brackets consists of the following operations:
In a first step, the bonding areas 1" of the first part 1 of the various brackets are fixed in appropriate positions to the rear wall 3 of the cab.
In a second step, the two semicircular areas 1' and 2' of the various brackets are joined together so as to overlap and at an appropriate angle, so as to adapt to the angle of the aerodynamic appendix 4 at the point at which the bracket is fixed in relation to the rear wall 3 of the cab. Said angle may vary along the length of the appendix (fig. 8).
In a third step, the aerodynamic appendices 4 are applied and fixed to the bonding areas 2" of the second parts of the brackets.

The three steps may be implemented in a different order.

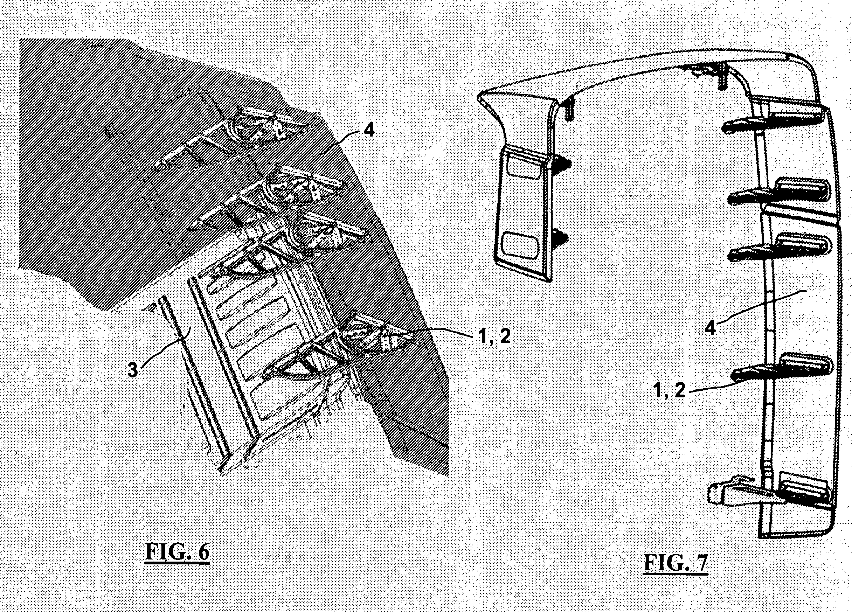

There may be aerodynamic appendices on at least a portion of the lateral edges and the upper edge of the rear wall of the cab (figures 6 and 7).

It will be apparent to the person skilled in the art that other alternative and equivalent embodiments of the invention can be conceived and reduced to practice without departing from the true spirit of the invention.

According to an alternative embodiment the second part 2 of the bracket comprises a central fissure 10 into which the semicircular area 1' of the first part of the bracket is inserted (fig. 4).

According to another alternative embodiment the series of holes 7 and 8 are replaced by matching slots or semicircular fissures 11 (fig. 1), possibly without spokes.

It will be possible for the person skilled in the art to embody the invention without introducing any further construction details.

## Claims

1. Bracket for mounting one or more aerodynamic appendices on a vehicle cab especially of an industrial vehicle, comprising
a first part (1) that is fixed to said cab (3), and a second part (2) that is fixed to said aerodynamic appendix (4), said first and second parts comprising areas that can be partially overlapped so that they are reciprocally joined, in a reciprocally variable position, so as to follow the variations in the shape and in the angle of said aerodynamic appendices in relation to said cab,
**characterized in that** said partially overlapping areas of said first and second parts -comprise a first semicircular area (1') in said first part, and a second semicircular area (2') in said second part, said first semicircular area (1') being arranged towards the inside of said first part, said second semicircular area (2') being arranged towards the outside of said second part.

2. Bracket according to claim 1, **characterized in that** said first and second semicircular areas (1', 2') comprise spokes (5, 6) provided with one or more holes (7, 8) arranged along the length thereof, said spokes extending in a straight or curved line, so that at least a portion of said one or more holes (7, 8) match up in each position in which said first and second parts are joined together, so that fastening elements can be inserted.

3. Bracket according to claim 1, **characterized in that** said first part (1) comprises a first bonding area (1") suitable for being fixed to a rear wall (3) of said cab, and said second part (2) comprises a second bonding area (2") suitable for being fixed to an inner side of said aerodynamic appendix (4).

4. Bracket according to claim 3, **characterized in that** said one or more aerodynamic appendices comprise bosses (9) with embedded or molded metal inserts, or plates with studs to enable said fixing of said second bonding area (2") to said aerodynamic appendix (4).

5. Bracket according to claim 1, **characterized in that** said second part (2) comprises a central fissure (10) into which said first semicircular area (1') can be inserted.

6. Bracket according to claim 2, **characterized in that** said first and/or second semicircular area (1', 2') comprise(s) matching slots or semicircular fissures.

7. Bracket according to any of the previous claims, **characterized in that** it is made of plastic material possibly reinforced with glass fiber, or aluminium alloy.

8. Method for mounting one or more brackets according to claim 3, **characterized in that** it comprises of the following steps:
- said first bonding areas (1 ") are fixed in appropriate positions on said rear wall (3) of the cab;
- said first and second semicircular areas (1', 2') of said one or more brackets are joined together so that they overlap and are arranged at an appropriate angle, so as to adapt to the angle of the aerodynamic appendix (4) at the points in which said one or more brackets are fastened in relation to the rear wall (3) of the cab;
- said aerodynamic appendices (4) are applied by fixing them to said second bonding areas (2").

9. Vehicle cab, especially of an industrial vehicle, comprising one or more brackets for fastening one or more aerodynamic appendices, according to any of the claims from 1 to 7.

## Patentansprüche

1. Halterung zum Montieren eines oder mehrere aerodynamischer Fortsätze an eine Fahrzeugkabine, insbesondere eines gewerblichen Fahrzeugs, aufweisend
einen ersten Teil (1), der an der Kabine (3) befestigt ist, und einen zweiten Teil (2), der an dem aerodynamischen Fortsatz (4) befestigt ist, wobei der erste und der zweite Teil Bereiche aufweisen, die in einer wechselseitig variablen Position teilweise überlappt sein können, so dass sie wechselseitig verbunden sind, um den Variationen der Form und des Winkels der aerodynamischen Fortsätze in Bezug auf die Kabine folgen zu können,
**dadurch gekennzeichnet, dass** die teilweise überlappenden Bereiche des ersten und zweiten Teils einen ersten halbkreisförmigen Bereich (1') in dem ersten Teil und einen zweiten halbkreisförmigen Bereich (2') in dem zweiten Teil aufweisen, wobei der erste halbkreisförmige Bereich (1') in Richtung des Inneren des ersten Teils angeordnet ist, wobei der zweite halbkreisförmige Bereich (2') in Richtung des Äußeren des zweiten Teils angeordnet ist.

2. Halterung nach Anspruch 1, **dadurch gekennzeichnet, dass** der erste und zweite halbkreisförmige Bereich (1', 2') Speichen (5, 6) aufweist, die mit einer oder mehreren Öffnungen (7, 8) versehen sind, die entlang der Länge davon angeordnet sind, wobei sich die Speichen in einer geraden oder gekrümmten Linie erstrecken, so dass zumindest ein Abschnitt der einen oder mehreren Öffnungen (7, 8) in jeder Position, in welcher der erste und zweite Teil miteinander verbunden sind, so zusammenpassen, dass Befestigungselemente eingeführt werden können.

3. Halterung nach Anspruch 1, **dadurch gekennzeichnet, dass** der erste Teil (1) einen ersten Verbindungsbereich (1'') aufweist, der dazu geeignet ist, an einer Rückwand (3) der Kabine befestigt zu werden, und der zweite Teil (2) einen zweiten Verbindungsbereich (2") aufweist, der dazu geeignet ist, an einer Innenseite des aerodynamischen Fortsatzes (4) befestigt zu werden.

4. Halterung nach Anspruch 3, **dadurch gekennzeichnet, dass** einer oder mehrere aerodynamische Fortsätze Ansätze (9) mit eingebetteten oder eingeformten Einsätzen oder Platten mit Ansatzbolzen aufweisen, um das Befestigen des zweiten Verbindungsbereichs (2") an dem aerodynamischen Fortsatz (4) zu ermöglichen.

5. Halterung nach Anspruch 1, **dadurch gekennzeichnet, dass** der zweite Teil (2) einen mittigen Spalt (10) aufweist, in den der erste halbkreisförmige Bereich (1') eingesetzt werden kann.

6. Halterung nach Anspruch 2, **dadurch gekennzeichnet, dass** der erste und/oder zweite halbkreisförmige Bereich (1', 2') zusammenpassende Schlitze oder halbkreisförmige Spalte aufweisen/aufweist.

7. Halterung nach einem der vorgehenden Ansprüche, **dadurch gekennzeichnet, dass** sie aus Kunststoffmaterial, das möglicherweise durch Glasfaser oder eine Aluminiumlegierung verstärkt ist, gemacht ist.

8. Verfahren zum Montieren einer oder mehrerer Halterungen nach Anspruch 3, **dadurch gekennzeichnet, dass** es die folgenden Schritte umfasst:
- die ersten Verbindungsbereiche (1'') werden an geeigneten Positionen an der Rückwand (3) der Kabine befestigt;
- die ersten und zweiten halbkreisförmigen Bereiche (1', 2') der einen oder mehreren Halterungen werden miteinander verbunden, so dass sie überlappen, und werden in einem geeigneten Winkel angeordnet, so dass sie sich an den Winkel des aerodynamischen Fortsatzes (4) an den Punkten anpassen, an denen die eine oder mehreren Halterungen in Bezug auf die Rückwand (3) der Kabine befestigt werden;
- wobei die aerodynamischen Fortsätze (4) dadurch angebracht werden, dass sie an den zweiten Verbindungsbereichen (2") befestigt werden.

9. Fahrzeugkabine, insbesondere eines gewerblichen Fahrzeugs, aufweisend eine oder mehrere Halterungen zum Befestigen eines oder mehrerer aerodynamischer Fortsätze gemäß einem der Ansprüche 1 bis 7.

## Revendications

1. Console destinée à monter un ou plusieurs appendices aérodynamiques sur une cabine de véhicule, en particulier d'un véhicule industriel, comprenant
une première partie (1) fixée à ladite cabine (3) et une seconde partie (2) fixée audit appendice aérodynamique (4), lesdites première et seconde parties comprenant des zones pouvant être en partie chevauchées de sorte qu'elles soient reliées réciproquement, dans une position réciproquement variable, de manière à suivre les variations de forme et d'angle desdits appendices aérodynamiques par rapport à ladite cabine,
**caractérisée en ce que** lesdites zones se chevauchant partiellement desdites première et seconde parties comprennent une première zone semi-circulaire (1') dans ladite première partie et une seconde zone semi-circulaire (2') dans ladite seconde partie, ladite première zone semi-circulaire (1') étant disposée en direction de l'intérieur de ladite première partie, ladite seconde zone semi-circulaire (2') étant disposée en direction de l'extérieur de ladite seconde partie.

2. Console selon la revendication 1, **caractérisée en ce que** lesdites première et seconde zones semi-circulaires (1', 2') comprennent des bras (5, 6) pourvus d'un ou de plusieurs trous (7, 8) disposés le long de la longueur desdits bras, lesdits bras s'étendant suivant une ligne droite ou courbe, de sorte que chaque position d'au moins une partie dudit ou desdits trous (7, 8) corresponde à celle dans laquelle lesdites première et seconde parties sont reliées l'une à l'autre, de sorte que des éléments de fixation puissent être insérés.

3. Console selon la revendication 1, **caractérisée en ce que** ladite première partie (1) comprend une première zone de collage (1'') adaptée à être fixée sur une paroi arrière (3) de ladite cabine, et ladite seconde partie (2) comprend une seconde zone de collage (2'') adaptée à être fixée à un côté intérieur dudit appendice aérodynamique (4).

4. Console selon la revendication 3, **caractérisée en ce qu'**un ou plusieurs appendices aérodynamiques comprennent des protubérances (9) dotées d'inserts métalliques encastrés ou moulés, ou des plaques dotées de goujons pour permettre ladite fixation de ladite seconde zone de collage (2'') sur ledit appendice aérodynamique (4).

5. Console selon la revendication 1, **caractérisée en ce que** ladite seconde partie (2) comprend une fissure centrale (10) à l'intérieur de laquelle peut être insérée ladite première zone semi-circulaire (1').

6. Console selon la revendication 2, **caractérisée en ce que** ladite première et/ou seconde zone semi-circulaire (1', 2') comprend(comprennent) des fentes ou fissures semi-circulaires correspondantes.

7. Console selon l'une quelconque des revendications précédentes, **caractérisée en ce qu'**elle est fabriquée à partir d'une matière plastique éventuellement renforcée par une fibre de verre ou d'un alliage d'aluminium.

8. Procédé de montage d'une ou plusieurs consoles selon la revendication 3, **caractérisé en ce qu'**il comprend les étapes suivantes :
- lesdites premières zones de collage (1'') sont fixées dans des positions appropriées sur ladite paroi arrière (3) de la cabine ;
- lesdites première et seconde zones semi-circulaires (1', 2') de ladite ou desdites consoles sont reliées ensemble de sorte qu'elles se chevauchent et soient disposées suivant un angle approprié, de manière à ce qu'elles s'adaptent à l'angle de l'appendice aérodynamique (4) aux points dans lesquels ladite ou lesdites consoles sont fixées par rapport à la paroi arrière (3) de la cabine ;
- lesdits appendices aérodynamiques (4) sont appliqués en les fixant auxdites secondes zones de collage (2'').

9. Cabine de véhicule, en particulier d'un véhicule industriel, comprenant une ou plusieurs consoles destinées à fixer un ou plusieurs appendices aérodynamiques, selon l'une quelconque des revendications 1 à 7.
